# EUROPÄISCHE PATENTSCHRIFT

(11) **EP 2 090 442 B1**
(45) Veröffentlichungstag und Bekanntmachung des Hinweises auf die Patenterteilung: **25.05.2011**
(21) Anmeldenummer: 09151165.9
(22) Anmeldetag: 23.01.2009
(51) Int. Cl.: B60C 11/03

(54) **Fahrzeugluftreifen**
Pneumatic tyres for a vehicle
Pneus de véhicule

(30) Priorität: 15.02.2008 DE 102008009325
(43) Veröffentlichungstag der Anmeldung: 19.08.2009
(73) Patentinhaber: Continental Reifen Deutschland GmbH, 30165 Hannover (DE)
(72) Erfinder: Welge, Konrad, 31535 Neustadt (DE); Rittweger, Stefan, 30163 Hannover (DE)
(74) Vertreter: Finger, Karsten

(56) Entgegenhaltungen:
- EP-A- 1 410 927
- EP-A- 1 918 130
- US-A- 5 967 210

## Beschreibung

Die Erfindung betrifft einen Fahrzeugluftreifen für den Einsatz unter winterlichen Fahrbedingungen, mit einem Laufstreifen, welcher laufrichtungsgebunden ausgeführt ist und Profilelemente, wie Profilblöcke und Profilrippen aufweist, die durch in Umfangsrichtung umlaufende Umfangsnuten voneinander getrennt sind, wobei Profilblöcke vorgesehen sind, deren von einer Umfangsnut begrenzte Blockflanken jeweils durch eine in den Block hineinragende Schneetasche in zwei Flankenabschnitte geteilt ist.

Es ist bekannt, in Laufstreifen von Winterreifen für Personenkraftwagen Schneetaschen - dies sind kurze, sacknutartige Einbuchtungen in den Profilblöcken - vorzusehen, welche die Aufgabe haben, Schnee am Durchrutschen in der benachbarten Umfangsnut zu hindern, um Traktion aufzubauen.

Der aus der EP 1 410 927 A bekannte Fahrzeugluftreifen weist einen Laufstreifen mit einer Anzahl von in Umfangsrichtung umlaufenden Blockreihen auf, welche voneinander durch Umfangsnuten getrennt sind. Von der jeweils schulterseitig gelegenen Umfangsnut verlaufen kurze Sacknuten mittig in die Profilblöcke der Schulterblockreihen. Diese Profilblöcke weisen an der Umfangsnut spitzwinkelige Eckbereiche auf, die, um einen ungleichförmigen Abrieb zu vermeiden, unter Bildung von dreieckigen Schrägflächen angefast sind. Aus der gattungsbildenden US-A-5 967 210 ist ein Laufstreifen für eine Fahrzeugluftreifen bekannt, welcher ebenfalls Blockreihen aufweist, die durch in Umfangsrichtung umlaufende Nuten begrenzt sind und deren Profilblöcke, ausgehend von den Umfangsnuten, sacknutartige Einbuchtungen aufweisen. Sämtliche entlang den Umfangsnuten verlaufenden Blockkanten sind angefast.

Aus der WO 03/013881 A ist ein Fahrzeugluftreifen bekannt, dessen Laufstreifen auf Schnee hinsichtlich Traktion verbessert sein soll. Der Laufstreifen besteht aus einer Anzahl von in Umfangsrichtung umlaufenden Blockreihen, die voneinander durch Umfangsnuten getrennt sind. Zur Verbesserung der Traktion auf schneeigem Untergrund weist jeder Block an seinen von Umfangsnuten begrenzten Blockflanken Abfasungen auf, welche sich entlang der jeweiligen Blockkante in Umfangsrichtung erstrecken und in Richtung Blockeck spitz zusammenlaufen. Jeder Block besitzt bevorzugt zwei derartige an diagonal gegenüberliegenden Ecken spitz zusammenlaufende Abfasungen.

Der Erfindung liegt die Aufgabe zugrunde bei einem Reifen der eingangs genannten Art die Wirkung der Schneetaschen und damit die Traktion des Reifens auf Schnee signifikant zu verbessern.

Gelöst wird die gestellte Aufgabe erfindungsgemäß dadurch, dass von den zwei Flankenabschnitten ausschließlich jener Blockflankenabschnitt, welcher sich, bezogen auf die Abrollrichtung des Reifens, vor der Schneetasche befindet, unter Bildung einer Schrägfläche, welche von der Blockoberseite in Richtung Umfangsnut geneigt ist und sich über die Umfangslänge dieses Flankenabschnittes erstreckt, angefast ist.

Die Schrägflächen sind in der Lage, beim Abrollen des Reifens auf schneeigem Untergrund vermehrt Schnee in die Schneetaschen zu befördern und ein Verdichten des Schnees in den Schneetaschen zu unterstützen. Die auf diese Weise in den Schneetaschen gebildeten "Schneeverzahnungen" ermöglichen mehr Traktion des Reifens auf schneeigem Untergrund.

Für eine besonders effektive Wirkung der Schrägflächen ist es von Vorteil, wenn diese gegenüber der radialen Richtung unter einem Winkel von 30° bis 60° geneigt verlaufen.

Auch der Größe der Schrägflächen kommt in diesem Zusammenhang eine gewisse Bedeutung zu, wobei es von Vorteil ist, wenn sich die radial innere Begrenzungskante jeder Schrägfläche in einem Abstand von der Blockoberseite befindet, welcher 20% bis 80% der Tiefe der Umfangsnut beträgt und wenn die an der Blockoberseite befindliche Begrenzungskante jeder Schrägfläche zwischen dem blockinnenseitigen Ende der Schneetasche und der Hälfte der Erstreckung der Schneetasche positioniert ist.

Der Effekt der Schrägflächen, gezielt Schnee in die Schneetaschen zu befördern, kann dadurch wirkungsvoll unterstützt werden, dass vorgesehen ist, gegenüber der mit den Schneetaschen versehenen Blockreihe eine weitere Blockreihe anzuordnen, wobei die den Schrägflächen gegenüber liegenden Eckbereiche der Blöcke dieser Blockreihe jeweils mit einer halbschaufelartigen Ausnehmung versehen sind.

Damit diese Ausnehmungen besonders wirkungsvoll dazu beitragen, Schnee aus der Umfangsnut in die Schneetaschen zu befördern, sollte ihre größte Tiefe zwischen 50% und 80% der Tiefe der Umfangsnut betragen und die Stelle mit der größten Tiefe an der Blockecke positioniert sein. In diesem Zusammenhang kommt auch der Umfangserstreckung der Ausnehmung Bedeutung zu, die Ausnehmung sollte sich soweit erstrecken, dass sich ihr Ende im Bereich gegenüber der Schneetasche befindet.

Ein unerwünschtes Verfangen von Schnee in der Ausnehmung wird dadurch verhindert, dass die Ausnehmung über ihre Erstreckung entlang der Umfangsnut derart ausgeführt wird, dass ihre Breite an der Blockecke maximal 5 mm beträgt und bis zum Ende der Ausnehmung gegenüber der Schneetasche auf bis zu 0 mm abgenommen hat.

Weitere Merkmale, Vorteile und Einzelheiten der Erfindung werden nun anhand der Zeichnung, die schematisch Ausführungsbeispiele darstellt, näher beschrieben. Dabei zeigen
Fig. 1 eine Draufsicht auf einen Abschnitt eines Laufstreifens eines Fahrzeugluftreifens,
Fig. 2 eine Schrägansicht eines Blockes aus Fig. 1,
Fig. 3 eine Draufsicht auf zwei Profilblöcke eines Laufstreifens mit einer weiteren Ausführungsform der Erfindung und
Fig. 4 eine Schrägansicht des einen Blockes aus Fig. 3.

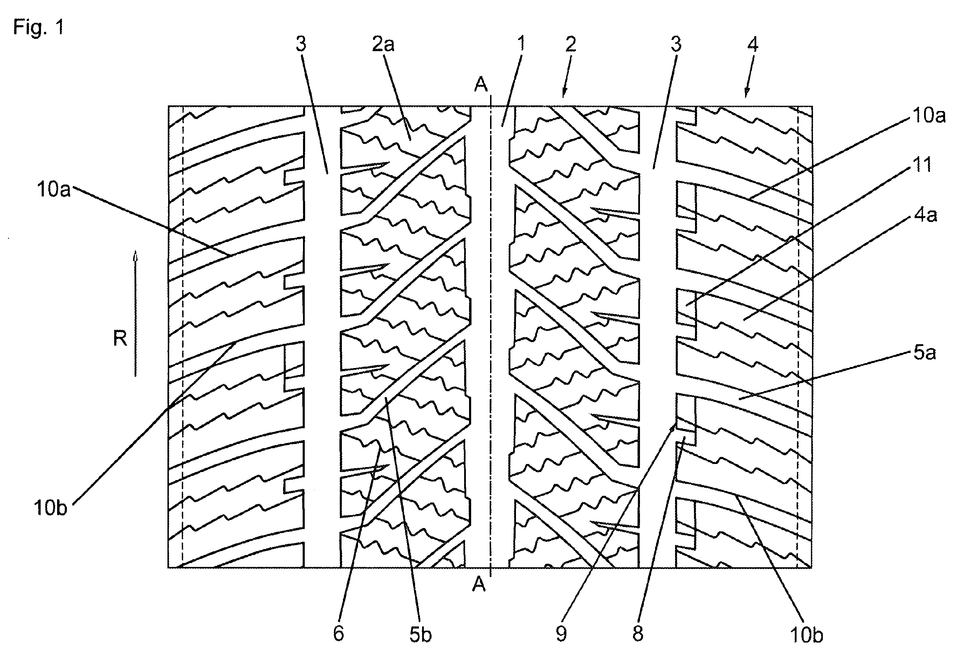

Fig. 1 zeigt einen Abschnitt eines Laufstreifens, der insbesondere für Winterreifen von Personenkraftwagen geeignet und vorgesehen sind. Erfindungsgemäß ausgeführte Laufstreifen sind laufrichtungsgebunden gestaltet, sodass ein Reifen mit einem solchen Laufstreifen derart am Fahrzeug zu montieren ist, dass eine bestimmte Abrollrichtung, die in Fig. 1 bis Fig. 3 mit dem Pfeil R angedeutet ist, eingehalten ist. Der in Fig. 1 beispielhaft gezeigte Laufstreifen weist eine entlang des Reifenäquators, welcher durch die Linie A-A gekennzeichnet ist, in Umfangsrichtung umlaufende breite Umfangsnut 1 auf. Beidseitig der Umfangsnut 1 verläuft jeweils eine Blockreihe 2, die durch je eine weitere, in Umfangsrichtung umlaufende Umfangsnut 3 von einer Schulterblockreihe 4 getrennt ist. Die Blöcke 2a in der Blockreihe 2 und die Schulterblöcke 4a in den Schulterblockreihen 4 sind voneinander durch Quernuten 5a, 5b getrennt, welche, über die gesamte Breite des Laufstreifens betrachtet, in Richtung zum Reifenäquator A-A gepfeilt verlaufen, sodass sich durch den Verlauf der Quernuten 5a, 5b die Laufrichtungsgebundenheit ergibt. Die Quernuten 5b schließen bei der gezeigten Ausführungsform mit der Umfangsrichtung einen Winkel in der Größenordnung von 45 ° ein, die Quernuten 5b verlaufen im Wesentlichen in Laufstreifenrichtung

Die Blöcke 2a in den beiden mittleren Blockreihen 2 sind jeweils mit einer Anzahl von in Draufsicht wellen- oder zick-zack-förmig verlaufenden Einschnitten 6 versehen, die sich im Wesentlichen in Laufstreifenquerrichtung erstrecken. Die Schulterblöcke 4a in den Schulterblockreihen 4 sind jeweils mit zwei etwa zick-zack-förmigen Einschnitten 7 versehen, welche sich parallel zu den Quernuten 5a erstrecken.

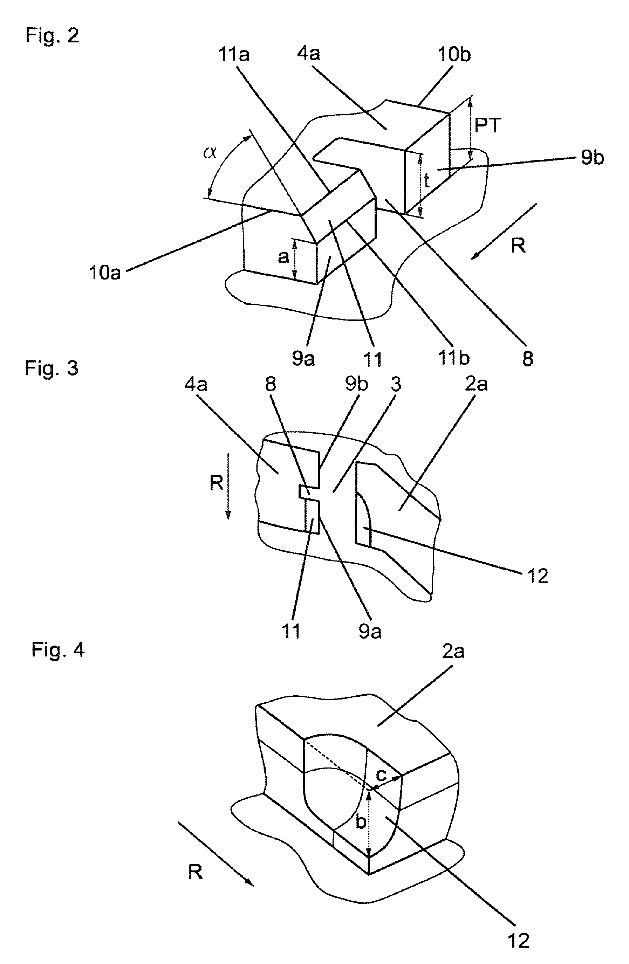

Die von der Umfangsnut 3 begrenzten Blockflanken 9 der Schulterblöcke 4a sind in ihrem mittleren Abschnitt jeweils von einer in den Block 4a hineinragenden Schneetasche 8 unterbrochen, wodurch zwei Flankenabschnitte 9a, 9b gebildet werden. Die Schneetaschen 8 sind in der Art von kurzen Sacknuten ausgeführt, die wie in Fig. 1 und Fig. 2 gezeigt ist, bis zum Grund der Umfangsnuten 3 reichen können. Die Schneetaschen 8 werden derart ausgeführt, dass ihre Tiefe t, von der Blockoberfläche aus betrachtet, mindestens 50% der Tiefe PT der Umfangsnuten 3 beträgt. Die Schneetaschen 8 erstrecken sich mit einer im Wesentlichen konstanten Breite von 4 mm bis 6 mm in Lauftstreifenquerrichtung. Die Schneetaschen 8 können auch in Richtung Blockinneres geringfügig schmäler werden. Die Erstreckung der Schneetaschen 8 in den jeweiligen Block 4a beträgt zwischen 4 mm und 8 mm.

Durch die laufrichtungsgebundene Ausführung des Laufstreifens weist jeder Block 4a eine einlaufende Blockkante 10a - diese tritt beim Abrollen des Reifens zuerst in den Untergrund ein - und eine auslaufende Blockkante 10b auf. Gemäß der Erfindung ist der an die einlaufende Blockkante 10a anschließende Abschnitt 9a der Blockflanke 9 an der Blockoberseite angefast. Dadurch wird eine Schrägfläche 11 gebildet, die derart ausgeführt wird, dass sie unter einem Winkel α in der Größenordnung von 30 ° bis 60 ° zur radialen Richtung geneigt ist, dass ihre radial innere Begrenzungskante 11a sich in einem Abstand a von 20% bis 80% der Tiefe PT der Umfangsnut 3 befindet und dass ihre an der Blockoberseite befindliche zweite Begrenzungskante 11b zumindest bei 50% der Erstreckung der Schneetasche 8 in den Block 4a positioniert ist. Die Begrenzungskante 11b kann sich auch am blockinnenseitigen Ende der Schneetasche 8 befinden. Gemäß einer bevorzugten Ausführung ist die Schrägfläche 11 rechteckig und ihre Begrenzungskanten 11a, 11b verlaufen parallel zueinander und parallel zur Umfangsnut 3.

Fig. 3 zeigt einen Schulterblock 4a und den diesem gegenüber liegenden Block 2a einer Blockreihe 2 sowie einen Abschnitt der zwischen den Blöcken 2a, 4a verlaufenden Umfangsnut 3. Im Block 4a sind analog zu Fig. 1 eine Schneetasche 8 und eine Schrägfläche 11 ausgebildet. Die der Schrägfläche 11 am Block 4a gegenüberliegende Ecke des Blockes 2a ist halbschaufelartig gerundet ausgenommen. Diese gerundet ausgeführte Ausnehmung 12 weist ihre größte Tiefe b an der Blockecke auf, wobei b zwischen 50% und 80% der Tiefe PT beträgt. In Umfangsrichtung erstreckt sich die Ausnehmung 12 zumindest bis zur Schneetasche 8, insbesondere bis zum Ende der Schneetasche 8, gegebenenfalls auch über dieses geringfügig hinaus. Die Breite c der Ausnehmung 12 beträgt an der Blockecke bis zu 5 mm und verringert sich bis zum Ende der Ausnehmung 12, gegenüber der Schneetasche 8, auf Null.

Beim Abrollen eines Reifens mit einem derart ausgeführten Laufstreifen auf schneeigem Untergrund verfängt und sammelt sich Schnee in den Schneetaschen 8 und wird dort verdichtet, es entstehen "Schneeverzahnungen" sodass mehr Traktion aufgebaut werden kann. Die Schneetaschen 8 behindern daher ein nachteiliges Rutschen des Schnees in den Umfangsrillen. Die Schrägflächen 11 und die gegebenenfalls vorgesehenen Ausnehmungen 12 tragen dazu bei, vermehrt Schnee vom Untergrund in die Schneetaschen 8 zu befördern.

Die Erfindung ist auf die dargestellten Ausführungsformen nicht eingeschränkt. Es ist möglich, Schneetaschen und Schrägflächen in mittleren Blockreihen anzuordnen. In einem erfindungsgemäß ausgeführten Laufstreifen können ferner Blockreihen in Kombination mit Profilrippen vorgesehen sein.

### Bezugszeichenliste

- 1: Umfangsnut
- 2: Blockreihe
- 2a: Block
- 3: Umfangsnut
- 4: Schulterblockreihe
- 4a: Block
- 5a: Quernut
- 5b: Quernut
- 6: Einschnitte
- 7: Einschnitte
- 8: Schneetasche
- 9: Blockflanke
- 9a: Abschnitt
- 9b: Abschnitt
- 10a: Blockkante einlaufend
- 10b: Blockkante auslaufend
- 11: Schrägfläche
- 11a: Begrenzungskante
- 11b: Begrenzungskante
- 12: Ausnehmung
- PT: Tiefe der Umfangsnut
- t: Tiefe der Schneetasche 8
- α: Winkel

## Patentansprüche

1. Fahrzeugluftreifen für den Einsatz unter winterlichen Fahrbedingungen, mit einem Laufstreifen, welcher laufrichtungsgebunden ausgeführt ist und Profilelemente, wie Profilblöcke (2a, 4a) und Profilrippen aufweist, die durch in Umfangsrichtung umlaufende Umfangsnuten (1, 3) voneinander getrennt sind, wobei Profilblöcke (4a) vorgesehen sind, deren von einer Umfangsnut (3) begrenzte Blockflanken (9) durch eine in den Block (4a) hineinragende Schneetasche (8) in zwei Flankenabschnitte (9a, 9b) geteilt ist,
**dadurch gekennzeichnet,**
**dass** von den zwei Flankenabschnitten (9a, 9b) ausschließlich jener Blockflankenabschnitt (9a), welcher sich, bezogen auf die Abrollrichtung (R) des Reifens, vor der Schneetasche (8) befindet, unter Bildung einer Schrägfläche (11), welche von der Blockoberseite in Richtung Umfangsnut (3) geneigt ist und sich über die Umfangslänge dieses Flankenabschnittes (9a) erstreckt, angefast ist.

2. Fahrzeugluftreifen nach Anspruch 1, **dadurch gekennzeichnet, dass** die Schrägfläche (11) gegenüber der radialen Richtung unter einem Winkel (α) von 30 ° bis 60 ° geneigt verläuft.

3. Fahrzeugluftreifen nach Anspruch 1 oder 2, **dadurch gekennzeichnet, dass** sich die radial innere Begrenzungskante (11b) der Schrägfläche in einem Abstand (a) von der Blockoberseite befindet, welcher 20% bis 80% der Tiefe (PT) der Umfangsnut (3) beträgt.

4. Fahrzeugluftreifen nach einem der Ansprüche 1 bis 3, **dadurch gekennzeichnet, dass** die an der Blockoberseite befindliche Begrenzungskante (11a) der Schrägfläche (11) zwischen dem blockinnenseitigen Ende der Schneetasche (8) und der Hälfte der Erstreckung der Schneetasche (8) positioniert ist.

5. Fahrzeugluftreifen nach einem der Ansprüche 1 bis 4, **dadurch gekennzeichnet, dass** die Begrenzungskanten (11a, 11b) der Schrägfläche (11) parallel zueinander und parallel zur Umfangsnut (3) verlaufen.

6. Fahrzeugluftreifen nach einem der Ansprüche 1 bis 5, **dadurch gekennzeichnet, dass** der mit den Schneetaschen (8) versehene Blockreihe (4) eine weitere Blockreihe (2) benachbart ist, wobei die den Schrägflächen (11) gegenüber liegenden Eckbereiche der Blöcke (2a) dieser Blockreihe (2) jeweils mit einer halbschaufelartigen Ausnehmung (12) versehen sind.

7. Fahrzeugluftreifen nach Anspruch 6, **dadurch gekennzeichnet, dass** die Ausnehmung (12) ihre größte Tiefe (t), die zwischen 50% und 80% der Tiefe (PT) der Umfangsnut (3) beträgt, an der Blockecke aufweist.

8. Fahrzeugluftreifen nach Anspruch 6 oder 7, **dadurch gekennzeichnet, dass** sich die Ausnehmung (12) in Umfangsrichtung des Blockes (2a) soweit erstreckt, dass sich ihr Ende im Bereich gegenüber der Schneetasche (8) befindet.

9. Fahrzeugluftreifen nach einem der Ansprüche 6 bis 8, **dadurch gekennzeichnet, dass** die Breite (c) der Ausnehmung (12) an der Blockecke bis zu 5 mm beträgt und bis zu ihrem Ende gegenüber der Schneetasche (8) im gegenüber liegenden Block (4a) bis auf Null abnimmt.

## Claims

1. Pneumatic vehicle tyre for use under winter driving conditions, with a tread rubber, which has a directional tread pattern and profile elements, such as profile blocks (2a, 4a) and profile ribs, which are separated from one another by circumferential grooves (1, 3) running around in the circumferential direction, wherein profile blocks (4a) of which the block flanks (9) that are bounded by a circumferential groove (3) are respectively divided into two flank portions (9a, 9b) by a snow pocket (8) protruding into the block (4a) are provided, **characterized in that**, of the two flank portions (9a, 9b), only the block flank portion (9a) that is located ahead of the snow pocket (8) in relation to the rolling direction (R) of the tyre is bevelled, forming a sloping face (11), which is inclined from the upper side of the block in the direction of the circumferential groove (3) and extends over the circumferential length of this flank portion (9a).

2. Pneumatic vehicle tyre according to Claim 1, **characterized in that** the sloping face (11) extends in an inclined manner with respect to the radial direction at an angle (α) of 30° to 60°.

3. Pneumatic vehicle tyre according to Claim 1 or 2, **characterized in that** the radially inner bounding edge (11b) of the sloping face is at a distance (a) from the upper side of the block which is 20% to 80% of the depth (PT) of the circumferential groove (3) .

4. Pneumatic vehicle tyre according to one of Claims 1 to 3, **characterized in that** the bounding edge (11a) of the sloping face (11) that is located on the upper side of the block is positioned between the end of the snow pocket (8) on the inner side of the block and half the extent of the snow pocket (8).

5. Pneumatic vehicle tyre according to one of Claims 1 to 4, **characterized in that** the bounding edges (11a, 11b) of the sloping face (11) extend parallel to one another and parallel to the circumferential groove (3).

6. Pneumatic vehicle tyre according to one of Claims 1 to 5, **characterized in that** the row of blocks (4) provided with the snow pockets (8) is neighboured by a further row of blocks (2), the corner regions of the blocks (2a) of this row of blocks (2) that lie opposite the sloping faces (11) being respectively provided with a half-scoop-like recess (12).

7. Pneumatic vehicle tyre according to Claim 6, **characterized in that** the recess (12) has its greatest depth (t), which is between 50% and 80% of the depth (PT) of the circumferential groove (3), at the corner of the block.

8. Pneumatic vehicle tyre according to Claim 6 or 7, **characterized in that** the recess (12) extends in the circumferential direction of the block (2a) to such an extent that its end is in the region opposite the snow pocket (8).

9. Pneumatic vehicle tyre according to one of Claims 6 to 8, **characterized in that** the width (c) of the recess (12) at the corner of the block is up to 5 mm and decreases to zero as it progresses to its end that is opposite the snow pocket (8) in the block (4a) lying opposite.

## Revendications

1. Bandage pneumatique pour roue de véhicule, destiné à être utilisé dans des conditions de roulage hivernales et présentant une bande de roulement qui est réalisée asymétriquement par rapport au sens de déplacement et présentant
des éléments profilés, par exemple des blocs profilés (2a, 4a) et des rainures profilées qui sont séparés les uns des autres par des rainures périphériques (1, 3) qui s'étendent dans le sens de la périphérie et
des blocs profilés (4a) dont le flanc (9) délimité par une rainure périphérique (3) est divisé en deux parties de flanc (9a, 9b) par une poche à neige (8) qui pénètre dans le bloc (4a),
**caractérisé en ce que**
parmi les deux parties de blanc (9a, 9b), seule la partie de flanc (9a) de bloc qui est située en avant de la poche à neige (8) dans la direction de roulement (R) du bandage de roue est chanfreinée en formant une surface oblique (11) inclinée par rapport au côté supérieur du bloc en direction de la rainure périphérique (3) et s'étendant sur la longueur de la périphérie de cette partie de flanc (9a).

2. Bandage pneumatique pour roue de véhicule selon la revendication 1, **caractérisé en ce que** la surface oblique (11) est inclinée d'un angle (α) de 30° à 60° par rapport à la direction radiale.

3. Bandage pneumatique pour roue de véhicule selon la revendication 1 ou 2, **caractérisé en ce que** l'arête radialement intérieure (11b) qui délimite la surface oblique est située à une distance (a) du côté supérieur du bloc qui représente de 20 % à 80 % de la profondeur (PT) de la rainure périphérique (3).

4. Bandage pneumatique pour roue de véhicule selon l'une des revendications 1 à 3, **caractérisé en ce que** l'arête (11a) qui délimite la surface oblique (11) et située sur le côté supérieur du bloc est disposée entre l'extrémité de la poche à neige (8) située du côté intérieur du bloc et la moitié de l'extension de la poche à neige (8).

5. Bandage pneumatique pour roue de véhicule selon l'une des revendications 1 à 4, **caractérisé en ce que** les arêtes (11a, 11b) qui délimitent la surface oblique (11) sont parallèles l'une à l'autre et parallèles à la rainure périphérique (3).

6. Bandage pneumatique pour roue de véhicule selon l'une des revendications 1 à 5, **caractérisé en ce qu'**une autre rangée (2) de blocs est voisine de la rangée (4) de blocs dotés des poches à neige (8), les parties de coin des blocs (2a) de cette rangée (2) de blocs située face aux surfaces obliques (11) étant toutes dotées d'une découpe (12) en forme de demi-pale.

7. Bandage pneumatique pour roue de véhicule selon la revendication 6, **caractérisé en ce que** la découpe (12) présente sur le coin du bloc sa plus grande profondeur (t), qui représente entre 50 % et 80 % de la profondeur (PT) de la rainure périphérique (3).

8. Bandage pneumatique pour roue de véhicule selon la revendication 6 ou 7, **caractérisé en ce que** la découpe (12) s'étend dans la direction périphérique du bloc (2a) jusqu'à ce que son extrémité soit située dans la zone située face à la poche à neige (8).

9. Bandage pneumatique pour roue de véhicule selon l'une des revendications 6 à 8, **caractérisé en ce que** la largeur (c) de la découpe (12) représente jusque 5 mm sur le coin du bloc et diminue jusqu'à zéro à son extrémité située face à la poche à neige (8) du bloc (4a) situé en face.
